# EUROPÄISCHE PATENTSCHRIFT

(11) **EP 3 988 733 B1**
(45) Veröffentlichungstag und Bekanntmachung des Hinweises auf die Patenterteilung: **04.12.2024**
(21) Anmeldenummer: 21204512.4
(22) Anmeldetag: 25.10.2021
(51) Int. Cl.: E04B 5/16, B65G 57/26, E04C 5/16, E04C 5/20, E04G 21/14

(54) **VORRICHTUNG ZUM BEABSTANDETEN ANORDNEN VON BETON-ELEMENTDECKENTEILEN, BETON-ELEMENTDECKENTEILE, SOWIE VERFAHREN ZUM BEABSTANDETEN ANORDNEN VON BETON-ELEMENTDECKENTEILEN**
DEVICE FOR THE SPACED ARRANGEMENT OF CONCRETE ELEMENT CEILING PARTS, CONCRETE ELEMENT CEILING PARTS, AND METHOD FOR THE SPACED ARRANGEMENT OF CONCRETE ELEMENT COVER PARTS
DISPOSITIF D'AGENCEMENT ESPACÉ D'ÉLÉMENTS DE PLAFOND EN BÉTON, ÉLÉMENTS DE PLAFOND EN BÉTON ET PROCÉDÉ D'AGENCEMENT ESPACÉ D'ÉLÉMENTS DE PLAFOND EN BÉTON

(30) Priorität: 23.10.2020 DE 102020127934
(43) Veröffentlichungstag der Anmeldung: 27.04.2022
(73) Patentinhaber: Hirt GmbH Metall- und Kunststofftechnik, 78098 Triberg (DE)
(72) Erfinder: Hirt, Michael, 78098 Triberg (DE)
(74) Vertreter: Westphal, Mussgnug & Partner Patentanwälte mbB

(56) Entgegenhaltungen:
- DE-A1- 4 241 355
- DE-U1- 29 704 272
- DE-U1- 8 405 032

## Beschreibung

Die vorliegende Erfindung betrifft eine Vorrichtung zum beabstandeten Anordnen von Beton-Elementdeckenteilen mit einem einen Obergurt umfassenden Gitterträger mit den Merkmalen des Patentanspruchs 1, ein Beton-Elementdeckenteil mit den Merkmalen des Patentanspruchs 9, die Verwendung der Vorrichtung zum beabstandeten Anordnen mit den Merkmalen des Patentanspruchs 11, sowie ein Verfahren zum beabstandeten Anordnen mit den Merkmalen des Patentanspruchs 12.

Beton-Elementdeckenteile sind aus dem Stand der Technik in einer Vielzahl von Ausgestaltungen vorbekannt und werden typischer Weise als Halbfertigteildecke nach DIN 1045 ausgebildet. Beton-Elementdeckenteile bestehen aus einer in einem Fertigteilwerk vorgefertigten ca. 5 cm dicken Stahlbetonplatte aufweisend einen ersten Seitenbereich und einen zweiten Seitenbereich mit einer statischen und metallischen Bewehrung. Die Bewehrung wird im Stand der Technik verbreitet durch einen oder mehrere Gitterträger gebildet, wobei der jeweilige Gitterträger aus einem Obergurt, zwei in die Stahlbetonplatte einbetonierten Untergurten und die Untergurte und den Obergurt verbindende Diagonalen gebildet ist.

Die Beton-Elementdeckenteile werden in dem Fertigteilwerk vorgefertigt und werden anschließend zu einer Baustelle transportiert, um dort montiert und gegebenenfalls mit einer Ortsbetonergänzung übergossen zu werden, um eine Decke zu bilden. In dem ersten Seitenbereich bildet die Stahlbetonplatte eine Sichtseite, während der zweite Seitenbereich durch die Ortsbetonergänzung übergossen wird.

Zur Herstellung von Betonteilen mit einem Baustahlgewebe werden in der DE 84 05 032 A1 Betonabstandshalter zur Beabstandung eines Baustahlgewebes von der darunterliegenden Verschalung mit einem klotzförmigen Abstandsteil aus Beton und einem Befestigungsteil gelehrt.

Weiteren Stand der Technik bildet die Druckschrift DE 42 41 355 A1.

Zur Lagerung und zum Transport werden die Beton-Elementdeckenteile typischerweise gestapelt oder aneinandergestellt. Um eine spätere verbesserte Handhabbarkeit der Beton-Elementdeckenteile zu gewährleisten, werden die Beton-Elementdeckenteile mit der Bewehrung nach oben positioniert, damit die Beton-Elementdeckenteile mittels einer Hebeeinrichtung an dem Gitterträger angehoben werden können.

Beton-Elementdeckenteile haben sich in der Vergangenheit bewährt, jedoch hat es sich als Nachteil gezeigt, dass die Sichtseiten der Beton-Elementdeckenteil bei der Lagerung und beim Transport, insbesondere durch auftretende Erschütterungen, in Mitleidenschaft gezogen werden.

Hier setzt die vorliegende Erfindung an.

Die vorliegende Aufgabe widmet sich der Aufgabe, eine verbesserte Vorrichtung zum Anordnen von Beton-Elementdeckenteilen, verbesserte Beton-Elementdeckenteile sowie ein verbessertes Verfahren zum Stapeln von Beton-Elementdeckenteilen vorzuschlagen. Die Vorschläge sollen in zweckmäßiger Weise die aus dem Stand der Technik bekannten Nachteile beseitigen. Die vorzuschlagende Vorrichtung soll kostengünstig in der Herstellung und zuverlässig im Einsatz sein, wodurch an der Baustelle verbesserte Beton-Elementdeckenteile mit einer geringeren Fehler-oder Ausschussquote bereitgestellt werden können.

Diese Aufgaben werden durch eine Vorrichtung mit den Merkmalen des Patentanspruchs 1, ein Beton-Elementdeckenteil mit den Merkmalen des Patentanspruchs 9, der Verwendung der Vorrichtung gemäß Anspruch 1 mit den Merkmalen des Patentanspruchs 11 sowie einem Verfahren zum beabstandeten Stapeln von Beton-Elementdeckenteilen mit den Merkmalen des Patentanspruchs 12 gelöst.

Weitere vorteilhafte Ausgestaltungen der Erfindung werden in den Unteransprüchen angegeben.

Die erfindungsgemäße Vorrichtung zur beabstandeten Anordnung von Beton-Elementdeckenteilen mit einem einen Obergurt umfassenden Gitterträger mit den Merkmalen des Patentanspruchs 1 weist ein Abstandshalteelement mit einer ersten Seite und einer zweiten Seite und zwei Haltearme auf. Der jeweilige Haltearm ist erfindungsgemäß U-förmig mit einem ersten Schenkel und einem zweiten Schenkel ausgebildet, wobei die ersten Schenkel der beiden Haltearme jeweils mit dem Abstandshalteelement auf der ersten Seite verbunden sind und wobei die zweiten Schenkel zwischen den ersten Schenkeln angeordnet sind und auf zueinander gewandten Seiten einen Klemmabschnitt zur kraft- und/oder formschlüssigen Aufnahme des Obergurts ausbilden.

Die vorliegende Erfindung beruht auf der Idee eine mittels Haltearmen aufklipsbare Vorrichtung vorzuschlagen, welche verlustsicher ein Abstandshalteelement auf der von dem Beton-Elementdeckenteil bzw. der Stahlbetonplatte abgewandten Seite zu positionieren, wodurch mittels der vorgeschlagenen Vorrichtung ein weiteres Beton-Elementdeckenteil durch die Vorrichtung gepolstert auf dem mit der Vorrichtung versehenen Beton-Elementdeckenteil abgelegt werden kann. Beim Aufklipsen der Vorrichtung werden die Haltearme vorzugsweise elastisch auseinandergebogen und der jeweilige Obergurt zwischen den zwei Haltearmen form- und/oder kraftschlüssig festgelegt.

Gemäß einer bevorzugten Weiterbildung der vorliegenden Erfindung weisen die zweiten Schenkel der Haltearme ein freistehendes Ende auf. Das freistehende Ende ist bevorzugt beabstandet zu der ersten Seite des Abstandshalteelements angeordnet und kann bevorzugt eine Schwenkbewegung in Richtung des ersten Schenkels des jeweiligen Haltearms frei und bevorzugt federelastisch durchführen, wodurch ein zwischen den Haltearmen ausgebildeter Aufnahmebereich für den Obergurt geweitet werden kann, um den Obergurt auch mit unterschiedlichen Dimensionierungen, insbesondere mit einer Dicke bzw. einem Durchmesser zwischen 6 mm bis 16 mm, aufnehmen zu können.

Eine Weiterbildung der vorliegenden Erfindung sieht vor, dass der zweite Schenkel des jeweiligen Haltearms in Richtung des Abstandshalteelements weist und beabstandet zu dem jeweiligen anderen zweiten Schenkel angeordnet ist. Insbesondere ist es weiterhin bevorzugt, wenn die beiden Halterarme spiegelsymmetrisch ausgebildet sind, wobei weiterhin bevorzugt der Abstand zwischen den zweiten Schenkeln beliebig klein gewählt werden kann. Wesentlich ist, dass die beiden zweiten Schenkel voneinander entkoppelt sind, mit anderen Worten untereinander frei beweglich sind. Die zweiten Schenkel können in einen unverformten Zustand, also vor dem Aufklipsen auf den Obergurt, in einem dritten Abstand A3 zueinander angeordnet sein, wobei der dritte Abstand A3 eine Vorspannung der Klemmung des Obergurts maßgeblich vorgibt. Bevorzugt gilt für den dritten Abstand A3: 1mm ≤ A3 ≤ 5mm, weiter bevorzugt 2mm ≤ A3 ≤ 4mm und noch weiter bevorzugt A3 ≈ 3mm ± 0,5mm.

Gemäß einer bevorzugten Weiterbildung ist zwischen dem ersten Schenkel und dem zweiten Schenkel ein Bogenabschnitt ausgebildet, wobei der Bogenabschnitt eine V-förmige Verjüngung zwischen den beiden Haltearmen formt. Die V-förmige Verjüngung weitet sich auf der von dem Abstandshalteelement abgewandten Seite auf, wodurch beim Aufklipsen der Vorrichtung auf den Obergurt durch eine Keilwirkung die Haltearme auseinandergeborgen werden. Ein Übergang zwischen dem Bogenabschnitt und dem zweiten Schenkel ist mit einem Übergangsradius versehen, wobei der Übergang beim Aufklipsen und Auseinanderbiegen der zweiten Schenkel eine Art Falle bildet. Im aufgeklipsten Zustand ist der Abstand zwischen den gegenüberstehenden Übergängen der zwei Haltearme am geringsten.

Nach Maßgabe einer Weiterbildung der Vorrichtung ist auf den zueinander gewandten Seiten der Klemmabschnitte eine Riffelung ausgebildet, wobei bevorzugt die Riffelung durch einen oder mehrere Zähne gebildet ist, deren Zahnspitzen und/oder Zahnflanken parallel zu dem Abstandshalteelement ausgebildet sind. Die Riffelung dient der Erhöhung eines Reibwiderstandes zwischen dem Klemmbereich und dem Obergurt im aufgeklipsten Zustand.

Darüber hinaus kann es vorteilhaft sein, wenn der jeweilige Haltearm eine Länge L aufweist, wobei die ersten Schenkel mit dem Abstandshalteelement in einem ersten Abstand A1 angeordnet sind, der zweite Schenkel zu dem ersten Schenkel eines Haltearms in einem zweiten Abstand A2 angeordnet ist, und beiden zweiten Schenkel in einem dritten Abstand A3 angeordnet sind; Bevorzugt gilt folgendes: A1 ≥ L ≥ A2 ≥ A3.

Die Erfindung sieht vor, dass das Abstandshalteelement und die Haltearme integral bzw. die Vorrichtung einstückig ausgebildet ist. Insbesondere ist es bevorzugt, wenn die Vorrichtung in einem Spritzgussverfahren aus einem Kunststoff hergestellt ist, der bevorzugt eine geringe Kriechneigung aufweist. Der Kunststoff kann ein hochmolekularer thermoplastischer Kunststoff, wie zum Beispiel POM, sein. Alternativ kann ein biodegradierbarer Kunststoff verwendet werden, um Umweltaspekten Rechnung zu tragen.

Weiterhin kann es von Vorteil sein, wenn das Abstandshalteelement kreuzförmig ausgebildet ist. Die kreuzförmige Form kann durch einen Pfahl und einen Balken gebildet sein, welche sich vorzugsweise senkrecht kreuzen, wobei in einer bevorzugten Weiterbildung der Pfahl länger ausgebildet ist als der Balken. An dem Pfahl kann vorzugsweise an gegenüberliegenden Endbereichen jeweils einer der Haltearme angeordnet sein, wobei der Balken in der Symmetrieebene liegt. Der Pfahl dient im Wesentlichen der beabstandeten Anordnung der Haltearme und der Balken der Ausbildung einer Auflage für den Obergurt. Beim Stapeln von Beton-Elementdeckenteilen wird der Balken zwischen dem Obergurt eines Beton-Elementdeckenteils und einer Sichtseite des darauf abgelegten Beton-Elementdeckenteils eingeklemmt. An dieser Stelle wird darauf hingewiesen, dass das Abstandshalteelement ebenfalls eine beliebige andere Form aufweisen kann, wie zum Beispiel kreisförmig, ellipsoid, polygon oder Kombinationen davon, wobei die kreuzförmige Ausgestaltung Materialeinsparungen und somit eine besonders kostengünstige Herstellung ermöglicht.

Die vorliegende Erfindung sieht vor, dass mindestens ein Klemmaufsatz vorgesehen ist, und dass der Klemmaufsatz auf der zweiten Seite des Abstandshalteelements befestigbar ist. Der Klemmaufsatz kann an die Form des Abstandshalteelements angepasst sein, und dient einer zusätzlichen Beabstandung zwischen zwei Beton-Elementdeckenteilen.

Auch hat es sich als vorteilhaft erwiesen, wenn Befestigungsmittel vorgesehen sind, durch die der Klemmaufsatz an dem Abstandshalteelement befestigt werden kann. Die Befestigungsmittel können beispielsweise Klemmbacken umfassen, die auf gegenüberliegenden Seiten das Abstandshalteelement zum Herstellen einer Verbindung kontaktieren können. Die Klemmbacken sind vorzugsweise derart an dem Klemmaufsatz ausgebildet, dass mehrere Klemmbacken ebenfalls übereinander angeordnet werden können, um den Abstand zwischen zwei Beton-Elementdeckenteilen beliebig vergrößern zu können.

Ein weiterer Aspekt der vorliegenden Erfindung betrifft ein Beton-Elementdeckenteil mit einem einen Obergurt umfassenden Gitterträger und mindestens einer zuvor beschriebenen erfindungsgemäßen Vorrichtung. Das Beton-Elementdeckenteil weist vorzugsweise einen ersten Seitenbereich mit der Sichtseite und einen zweiten Seitenbereich auf. Im ersten Seitenbereich ist eine die Sichtseite ausbildende Stahlbetonplatte angeordnet, welche eine Bewehrung aufweist. Die Bewehrung wird aus mindestens einem Gitterträger gebildet, wobei der Gitterträger aus einem Obergurt, mindestens einem in der Stahlbetonplatte angeordneten Untergurt und einer den Untergurt und den Obergurt verbindenden Diagonalen gebildet wird und wobei in dem zweiten Seitenbereich der Obergurt beabstandet zu der Stahlbetonplatte angeordnet ist.

Gemäß einer Weiterbildung weist der Obergurt eine Gurtdicke D auf und die Länge L der Haltearme ist an die Gurtdicke angepasst. Bevorzugt entspricht die Gurtdicke D dem Abstand diametraler Seiten des Obergurts. Der Obergurt ist typischer Weise eine Stange, näherungsweise ein Rundprofil, wobei in diesem Fall die Gurtdicke D einem Durchmesser entspricht. Bevorzugt gilt für die Gurtdicke 6mm < D < 16mm.

Die Länge L des jeweiligen Haltearmes beträgt vorzugsweise 1,5D ≤ L ≤ 4D, wobei vorzugsweise die Länge L ca. 30mm ± 5mm beträgt und angibt, wie weit der jeweilige Haltearm von der ersten Seite des Abstandshalteelements absteht.

Ein weiterer Aspekt der vorliegenden Erfindung betrifft die Verwendung der zuvor beschriebenen erfindungsgemäßen Vorrichtung zum beabstandeten Stapeln zum Transport und/oder zur Lagerung von Beton-Elementdeckenteilen, wobei das jeweilige Beton-Elementdeckenteil mit einem einen Obergurt umfassenden Gitterträger ausgebildet ist.

Ein letzter Aspekt der vorliegenden Erfindung betrifft ein Verfahren zum beabstandeten Stapeln von Beton-Elementdeckenteilen mit einem einen Obergurt umfassenden Gitterträger aufweisend die Verfahrensschritte:
A) Bereitstellen eines Beton-Elementdeckenteils,
B) Aufklipsen mindestens einer erfindungsgemäßen Vorrichtung zum beabstandeten Stapeln auf den Obergurt des Beton-Elementdeckenteils derart, dass die Vorrichtung mittels einer kraft- und/oder formschlüssigen Verbindung an dem Obergurt befestigt ist und die zweite Seite des Abstandshalteelements auf der von dem Beton-Elementdeckenteile abgewandten Seite angeordnet ist, und
C) Positionieren eines weiteren Beton-Elementdeckenteils auf der zweiten Seite des Abstandshalteelements zur Bildung eines Stapels von Beton-Elementdeckenteilen.

Die Verfahrensschritte B) und C) können beliebig oft wiederholt werden, bis eine gewünschte Anzahl von Beton-Elementdeckenteilen angesammelt oder aufgestapelt ist. Beim Positionieren des weiteren Beton-Elementdeckenteils auf der zweiten Seite des Abstandshalteelements wird das Abstandshalteelement zwischen dem Obergurt eines Beton-Elementdeckenteils und einer Sichtseite eines weiteren Beton-Elementdeckenteils eingeklemmt, und polstert die Sichtseite gegenüber dem Obergurt ab. Dabei ist bevorzugt der Werkstoff der Vorrichtung 1 weicher als der Werkstoff der Sichtseite des weiteren Beton-Elementdeckenteils.

Bevorzugt wird die Vorrichtung zum beabstandeten Stapeln in einem Raster an dem mindestens einen Obergurt des Beton-Elementdeckenteils angeordnet. Insbesondere ist es bevorzugt, wenn mindestens drei Vorrichtungen, vorzugsweise vier oder mehr Vorrichtungen, flächig verteilt angeordnet werden. Nachfolgend wird unter Bezugnahme auf die begleitende Zeichnung ein Ausführungsbeispiel im Detail beschrieben. Es zeigen:
- Figur 1: eine stark vereinfachte Darstellung der Vorrichtung zum beabstandeten Stapeln eines Beton-Elementdeckensteils, die auf einen Obergurt eines Beton-Elementdeckenteils mit einem den Obergurt umfassenden Gitterträger aufgeklipst ist,
- Figur 2: eine Draufsicht auf die Vorrichtung gemäß Figur 1,
- Figur 3: Seitenansicht auf die Vorrichtung gemäß der Figuren 1-2,
- Figur 4: eine Draufsicht auf die Vorrichtung,
- Figur 5: die erfindungsgemäße Weiterbildung der Vorrichtung gemäß den Figuren 1 bis 4, wobei ein Klemmaufsatz auf der Vorrichtung angebracht ist,
- Figur 6a: eine perspektivische Darstellung des Klemmaufsatzes gemäß Figur 5, und
- Figur 6b: eine Draufsicht auf den Klemmaufsatzes gemäß Figur 6a.

Nachfolgend werden gleiche oder funktional gleiche Bauteile mit gleichen Bezugszeichen gekennzeichnet. Der Übersichtlichkeit halber sind in den einzelnen Figuren nicht alle gleichen oder funktional gleichen Teile mit einer Bezugsziffer versehen.

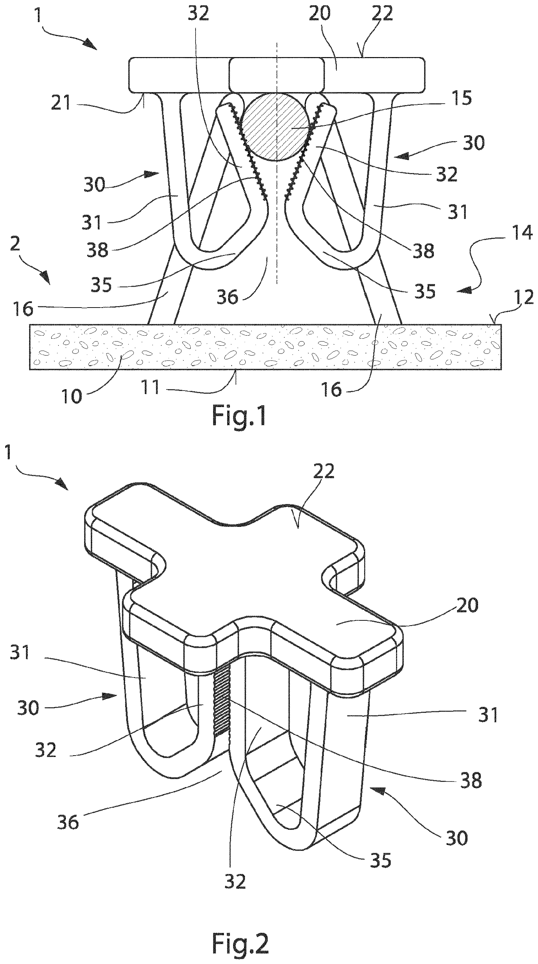

Figur 1 zeigt ein stark vereinfacht dargestelltes Beton-Elementdeckenteil 10, aufweisend einen ersten Seitenbereich 11 und einen zweiten Seitenbereich 12, wobei in dem ersten Seitenbereich 11 eine Stahlbetonplatte 17 angeordnet ist, welche in dem ersten Seitenbereich 11 eine Sichtseite 13 aufweist. Darüber hinaus weist das Beton-Elementdeckenteil 10 eine Bewehrung auf, welche aus einem oder mehreren Gitterträgern 14 mit einem Obergurt 15, zwei einbetonierten (nicht dargestellten) Untergurten, sowie die Untergurte und den Obergurt 15 verbindende Diagonalen 16 gebildet wird. Der Obergurt 15 steht in dem zweiten Seitenbereich 12 von der Stahlbetonplatte 17 ab und weist eine Dicke D bzw. einen Durchmesser zwischen 6 mm und 16 mm auf, also 6mm ≤ D ≤ 16mm.

Das Beton-Elementdeckenteil 10 wird in einem Fertigteilwerk vorgefertigt, gelagert und anschließend bei Bedarf zu einer Baustelle zur Bildung einer Halbfertigteildecke, beispielsweise nach DIN 1045, transportiert.

Zur Lagerung und zum Transport werden die Beton-Elementdeckenteile 10 typischerweise gestapelt.

Um bei der Lagerung und beim Transport Schäden auf der Sichtseite 13 der Stahlbetonplatte 17 zu vermeiden, wird auf der von der Stahlbetonplatte abgewandten Seite auf den Gitterträger 14 eine Vorrichtung 1 zum beabstandeten Anordnen der Beton-Elementdeckenteile 10 angeordnet, durch die die Sichtseite 13 der Stahlbetonplatte eines benachbarten Beton-Elementdeckenteils 10 beim Transport und/oder der Lagerung von dem Gitterträger 14 geschützt ist.

Die Vorrichtung 1, welche detailliert in den Figuren 2-4 dargestellt ist, umfasst ein Abstandshalteelement 20 und zwei Haltearme 30.

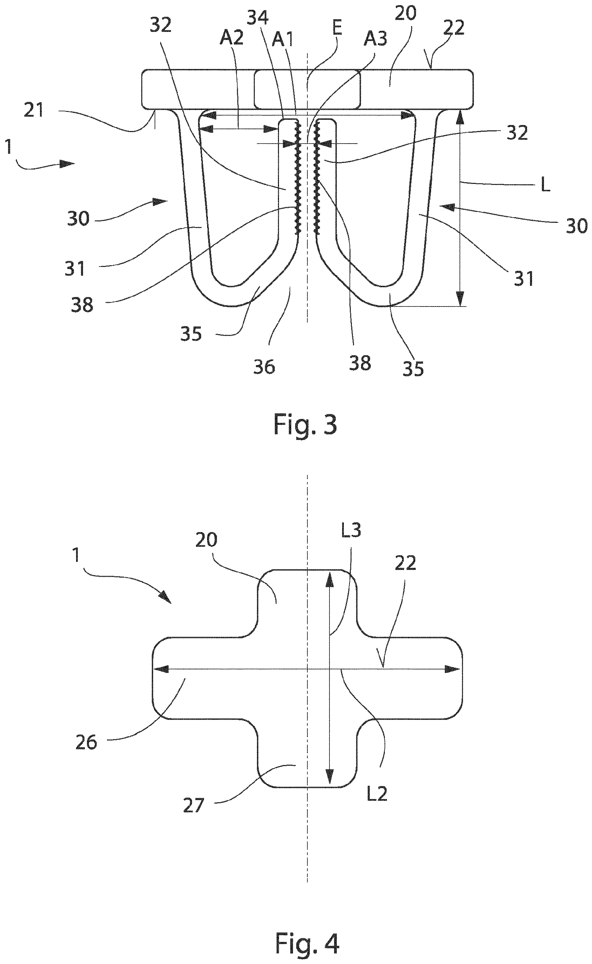

Das Abstandshalteelement 20 weist eine erste Seite 21 und eine zweite Seite 22 auf und kann, wie in den Figuren 2 und 4 ersichtlich ist, kreuzförmig aus einem Pfahl 26 und einem Balken 27 ausgebildet sein, welche in einer Symmetrieebene E spiegelsymmetrisch angeordnet sind. Der Pfahl 26 weist eine zweite Länge L2 auf und der Balken 27 eine dritte Länge L3, wobei wie in dem dargestellten Ausführungsbeispiel L2 ≥ L3 sein kann. An dieser Stelle wird angemerkt, dass das Abstandshalteelement 20 eine beliebige Form aufweisen kann, wobei bevorzugt die Ausgestaltung kreuzförmig, oval, rund, quaderförmig oder polygon ist.

Auf der ersten Seite 21 stehen von dem Abstandshalteelement 20 zwei Haltearme 30 ab. Die Haltearme 30 sind U-förmig ausgebildet und weisen einen ersten Schenkel 31, einen zweiten Schenkel 32 und einen den ersten Schenkel 31 und den zweiten Schenkel 32 verbindenden Bogenabschnitt 35 auf. Die Haltearme 30 stehen in einem ersten Abstand A1 von gegenüberliegenden Endbereichen des Pfahls 26 mit einer Länge L von der ersten Seite 21 des Abstandshalteelements 20 ab.

Das Abstandshalteelement 20 und die Haltearme 30 sind vorzugsweise integral, also aus einem Stück, aus Kunststoff hergestellt. Eine derartige Vorrichtung 1 kann bevorzugter Weise durch Spritzgießen hergestellt werden, wobei weiter bevorzugt als Werkstoff zum Spritzgießen ein hochmolekularer thermoplastischer Kunststoff, z.B. POM (Polyoxymethylene), verwendet wird. Um Spannungsspitzen zu vermeiden, können die Übergänge, insbesondere zwischen dem Abstandshalteelement 20 und den Haltearmen 30 verrundet sein.

Die ersten Schenkel 31 der Haltearme 30 sind in dem ersten Abstand A1 fest mit dem Abstandshalteelement 20 verbunden und können wie dargestellt in einem Winkel α zueinander geneigt abstehen, wobei der Winkel α ≈ 5° betragen kann. Die zweiten Schenkel 32 sind zwischen den beiden ersten Schenkeln 31 der beiden Haltearme 30 angeordnet.

Der Bogenabschnitt 25 des Haltearms 30 verbindet bogenförmig den jeweiligen ersten Schenkel 31 mit dem zweiten Schenkel 32. Darüber hinaus bildet der Bogenabschnitt 25 zwischen den zwei Haltearmen 30 eine V-förmige Verjüngung 36 aus. Die V-förmige Verjüngung 36 kann als ein Flankenabschnitt in dem jeweiligen Bogenabschnitt 25 ausgebildet sein, wobei die Flankenabschnitte vorzugsweise gerade ausgebildet sind und in einem Winkel von 90° ± 30° zueinander ausgerichtet sind.

Die zweiten Schenkel 32 können - wie in Figur 3 gezeigt - im entspannten Zustand in einem dritten Abstand A3 parallel zueinander angeordnet sein, wobei auf den gegenüberliegenden Seiten der zweiten Schenkel 32 jeweils ein Klemmabschnitt 38 ausgebildet sein kann.

Weiterhin ist unter Bezugnahme auf die Figur 3 ersichtlich, dass ein jeweiliges freies Ende 34 des Haltearmes 30 bzw. des zweiten Schenkels 32 beabstandet zu der ersten Seite 21 des Abstandshalteelements 20 angeordnet ist. Dadurch kann der zweite Schenkel 32 eine gefederte Schwenkbewegung in Richtung des ersten Schenkels 31 des jeweiligen Haltearms 30 vornehmen.

Der Klemmabschnitt 38 wird durch eine Riffelung gebildet, wobei die Riffelung nach Art einer Zahnstange ausgebildet sein kann, wobei die Zähne gemäß dem in Figur 3 gezeigten Zustand der Vorrichtung 1 parallel zu der ersten Seite 21 des Abstandshalteelements 20 angeordnet sein können.

Zum Lagern oder zum Transport können eine Vielzahl von Beton-Elementdeckenteile 10 übereinandergestapelt werden, wobei zum Schutz der Sichtseite 13 eines benachbarten Beton-Elementdeckenteils 10 auf dem Gitterträger 14 bzw. auf dem Obergurt 15 mindestens eine Vorrichtung 1, vorzugsweise eine Mehrzahl von Vorrichtungen in einem Raster, angeordnet werden kann bzw. können.

Zum Verbinden der Vorrichtung 1 mit dem Beton-Elementdeckenteil 10 wird die Vorrichtungen der Art auf den Obergurt 15 aufgeklipst, dass zwischen den zwei Halterarmen 30 der Obergurt 15 form- und/oder kraftschlüssig angeordnet ist. Beim Aufklipsen werden durch die Keilwirkung des Obergurts 15 an der V-förmigen Verjüngung 36 die zweiten Schenkel 32 elastisch jeweils in Richtung des ersten Schenkels 31 ausgelenkt. Der Obergurt 15 wird zwischen den beiden Haltearmen 30 eingeklemmt und gleichzeitig gegen die zweite Seite 22 des Abstandshalteelements 20 gedrückt, wodurch die Vorrichtung 1 verlustsicher an dem Gitterträger 14 angeordnet ist.

Die Vorrichtung 1 wird zur Bildung eines Stapels - wie in Figur 1 gezeigt ist - derart auf dem Obergurt 15 angeordnet, dass die die zweite Seite 22 des Abstandshalteelements 20 auf der von der Stahlbetonplatte 17 abgewandten Seite angeordnet ist.

Auf einem mit der Vorrichtung 1 versehenen Beton-Elementdeckenteil 10 kann ein weiteres (nicht dargestelltes) Beton-Elementdeckenteil 10` positioniert werden. Das weitere Beton-Elementdeckenteil 10` wird mit der Sichtseite 13 abgelegt, wobei die Vorrichtung 1 zur beabstandet Anordnung der Beton-Elementdeckenteile 10 zwischen der Sichtseite 13 des weiteren Beton-Elementdeckenteils 10' und dem Obergurt 15 eingeklemmt ist und die Sichtseite 13 schützend polstert.

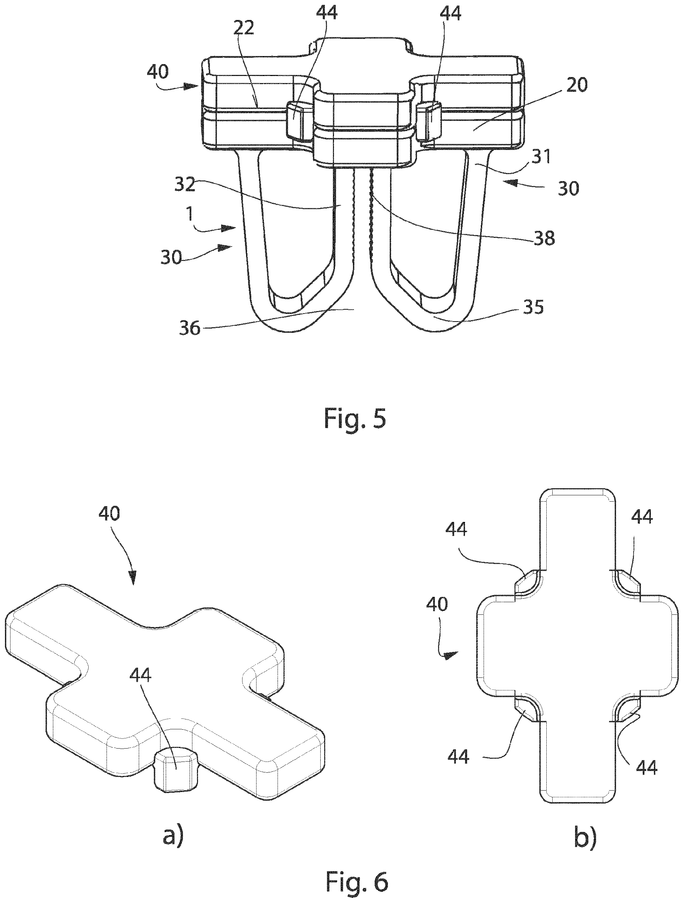

Gemäß der in Figur 5 dargestellten erfindungsgemäßen Weiterbildung ist zur Vergrößerung eines Abstandes zwischen dem Obergurt 15 und des weiteren Beton-Elementdeckenteils 10` die jeweilige Vorrichtung 1 mit einem Klemmaufsatz 40 versehen, wobei der Klemmaufsatz 40 mittels zwei auf diametralen Seiten ausgebildeten Klemmbacken 44 auf der zweiten Seite 22 des Abstandshalteelements 20 angeordnet werden kann. Der Klemmaufsatz 40 gemäß den Figuren 5,6a und 6b ist vorzugsweise aus einem Kunststoff, insbesondere einem Kunststoff mit niedriger Kriechneigung, noch weiter bevorzugt aus einem hochmolekularen thermoplastischen Kunststoff, z.B. POM, hergestellt.

Der Klemmaufsatz 40 bzw. dessen Klemmbacken 44 ist bevorzugt konfiguriert, bausteinartig durch die mehrfache gestapelte Anordnung einen gewünschten Abstand zwischen dem Obergurt 15 und dem weiteren Beton-Elementdeckenteil 10` einzustellen zu können.

### Bezugszeichenliste

- 1: Vorrichtung
- 10: Elementdeckenteil
- 11: erster Seitenbereich
- 12: zweiter Seitenbereich
- 13: Sichtseite
- 14: Gitterträger
- 15: Obergurt
- 16: Diagonale
- 17: Stahlbetonplatte
- 20: Abstandshalteelement
- 21: erste Seite
- 22: zweite Seite
- 26: Pfahl
- 27: Balken
- 30: Haltearme
- 31: erster Schenkel
- 32: zweiter Schenkel
- 34: freies Ende
- 35: Bogenabschnitt
- 36: Verjüngung
- 38: Klemmabschnitt
- 39: Riffelung
- 40: Klemmaufsatz
- 44: Klemmbacken
- A1: Abstand
- A2: Abstand
- A3: Abstand
- D: Dicke
- E: Symmetrieebene
- L: Länge von 30
- L2: Länge von 26
- L3: Länge von 27

## Patentansprüche

1. Vorrichtung (1) zum beabstandeten Anordnen zur Lagerung oder zum Transport von gestapelten Beton-Elementdeckenteilen (10) mit einem einen Obergurt (15) umfassenden Gitterträger (14), aufweisend:
- ein Abstandshalteelement (20) mit einer ersten Seite (21) und einer zweiten Seite (22) und
- zwei Haltearme (30),
- wobei der jeweilige Haltearm (30) U-förmig mit einem ersten Schenkel (31) und einem zweiten Schenkel (32) ausgebildet ist,
- wobei die ersten Schenkel (31) mit dem Abstandshalteelement (20) verbunden sind,
- wobei die zweiten Schenkel (32) zwischen den ersten Schenkeln (31) angeordnet sind und auf zueinander gewandten Seiten einen Klemmabschnitt (38) zur kraft- und/oder formschlüssigen Aufnahme des Obergurts ausbilden,
- wobei das Abstandshalteelement (20) und die Haltearme (30) integral aus einem Kunststoff hergestellt sind,
**dadurch gekennzeichnet, dass**
ein Klemmaufsatz (40) vorgesehen ist, und dass der Klemmaufsatz (40) auf der zweiten Seite (22) des Abstandshalteelements (20) befestigbar ist.

2. Vorrichtung (1) nach Anspruch 1,
**dadurch gekennzeichnet, dass**
der zweite Schenkel (32) ein freistehendes Ende (34) aufweist.

3. Vorrichtung (1) nach Anspruch 1 oder 2,
**dadurch gekennzeichnet, dass**
der zweite Schenkel (32) in Richtung des Abstandshalteelements (20) weist und beabstandet zu dem jeweiligen anderen zweiten Schenkel (32) angeordnet ist.

4. Vorrichtung (1) nach einem der Ansprüche 1 bis 3,
**dadurch gekennzeichnet, dass**
zwischen dem ersten Schenkel (31) und dem zweiten Schenkel (32) ein Bogenabschnitt (35) ausgebildet ist , und dass der Bogenabschnitt (35) eine V-förmige Verjüngung (36) zwischen den zwei Haltearmen (30) formt.

5. Vorrichtung (1) nach einem der Ansprüche 1 bis 4,
**dadurch gekennzeichnet, dass**
auf den zueinander gewandten Seiten der Klemmabschnitte (38) eine Riffelung (39) ausgebildet ist.

6. Vorrichtung (1) nach einem der Ansprüche 1 bis 5,
**dadurch gekennzeichnet, dass**
der jeweilige Haltearm (30) eine Länge (L) aufweist, dass die ersten Schenkel (31) mit dem Abstandshalteelement (20) in einem Anstand (A1) verbunden sind, dass die zweiten Schenkel (32) in einem Abstand (A3) beabstandet sind und dass Folgendes gilt: 0 < A3 < 6mm, A1 ≥ L ≥ A3 und A1 > 16mm.

7. Vorrichtung (1) nach einem der Ansprüche 1 bis 6,
**dadurch gekennzeichnet, dass**
das Abstandshalteelement (20) kreuzförmig ist.

8. Vorrichtung (1) nach einem der vorgenannten Ansprüche,
**dadurch gekennzeichnet, dass**
der Klemmaufsatz (40) zwei abstehende Klemmbacken (44) aufweist, die auf gegenüberliegenden Seiten das Abstandshalteelement (20) kontaktieren können.

9. Beton-Elementdeckenteil (10) mit einem einen Obergurt (15) umfassenden Gitterträger (14) und mindestens einer Vorrichtung (1) nach einem der vorgenannten Ansprüche.

10. Beton-Elementdeckenteil nach Anspruch 9,
**dadurch gekennzeichnet, dass**
der jeweilige Haltearm (30) eine Länge (L) und der Obergurt (15) ein Diagonalmaß (D) aufweist, und dass die Länge (L) und dass Diagonalmaß (D) in folgendem Verhältnis ausgebildet sind: 1,5D ≤ L ≤ 4D.

11. Verwendung der Vorrichtung (1) nach einem der vorgenannten Ansprüche 1 bis 8 zum beabstandeten Anordnen von Beton-Elementdeckenteilen (10) mit einem einen Obergurt (15) umfassenden Gitterträger (14) beim Transport und/oder der Lagerung.

12. Verfahren zum beabstandeten Anordnen von Beton-Elementdeckenteilen mit mindestens einem einen Obergurt (15) umfassenden Gitterträger (14) zur Lagerung oder zum Transport, aufweisend folgende Verfahrensschritte:
- Bereitstellen eines Beton-Elementdeckenteils,
- Aufklipsen mindestens einer Vorrichtung (1) nach einem der Ansprüche 1 bis 8 derart, dass die Vorrichtung (1) mittels einer kraft- und/oder formschlüssigen Verbindung an dem Obergurt (15) befestigt ist und die erste Seite (22) des Abstandshalteelements (20) auf der von dem Beton-Elementdeckenteil (10) abgewandten Seite angeordnet ist, und
- Ablegen eines weiteren Beton-Elementdeckenteils (10) auf der zweiten Seite (22) des Abstandshalteelements (20) .

13. Verfahren zum beabstandeten Anordnen nach Anspruch 12,
**dadurch gekennzeichnet, dass**
eine Mehrzahl von Vorrichtungen (1) in einem Raster auf dem jeweiligen Obergurt (15) angeordnet werden.

## Claims

1. Device (1) for the spaced arrangement for the storage or transport of stacked concrete element ceiling parts (10) with a lattice girder (14) including a top chord (15), comprising:
- a spacer element (20) with a first side (21) and a second side (22) and
- two retaining arms (30),
- wherein the respective retaining arm (30) is U-shaped and comprises a first leg (31) and a second leg (32),
- wherein the first legs (31) are connected to the spacer element (20),
- wherein the second legs (32) are arranged between the first legs (31) to form a clamping section (38) on opposing sides to receive the top chord in a non-positive or positive connection,
- wherein the spacer element (20) and the retaining arms (30) are manufactured from a plastic material as integral elements,
**characterised in that**
a clamping attachment (40) is provided, and **in that** the clamping attachment (40) can be fastened to the second side (22) of the spacer element (20).

2. Device (1) according to Claim 1,
**characterised in that**
the second leg (32) has a free-standing end (34).

3. Device (1) according to Claim 1 or 2,
**characterised in that**
the second leg (32) points in the direction of the spacer element (20) and is arranged at a distance from the respective other second leg (32).

4. Device (1) according to one of the Claims 1 to 3,
**characterised in that**
a curved section (35) is arranged between the first leg (31) and the second leg (32), and that the curved section (35) exhibits a V-shaped taper (36) between the two retaining arms (30).

5. Device (1) according to one of the Claims 1 to 4,
**characterised in that**
there is ribbing (39) on the sides of the opposing clamping sections (38).

6. Device (1) according to one of the Claims 1 to 5,
**characterised in that**
the respective retaining arm (30) has a length (L), that the first legs (31) are connected to the spacer element (20) at a distance (A1), that the second legs (32) are positioned apart at a distance (A3), and that the following applies: 0 < A3 < 6mm, A1 ≥ L ≥ A3 and A1 > 16mm.

7. Device (1) according to one of the Claims 1 to 6,
**characterised in that**
the spacer element (20) is formed in the shape of a cross.

8. Device (1) according to one of the above Claims,
**characterised in that**
the clamping attachment (40) has two protruding clamping jaws (44) which can establish contact with the spacer element (20) on opposing sides.

9. Concrete element ceiling part (10) with a lattice girder (14) comprising a top chord (15) and at least one device (1) according to one of the preceding claims.

10. Concrete element ceiling part according to Claim 9,
**characterised in that**
the respective retaining arm (30) has a length (L) and the top chord (15) has a diagonal dimension (D), and that the length (L) and the diagonal dimension (D) are formed according to the following ratio: 1.5D ≤ L ≤ 4D.

11. Use of the device (1) according to one of the preceding Claims 1 to 8 for the spaced arrangement of concrete element ceiling parts (10) with a lattice girder (14) comprising a top chord (15) during transport and/or storage.

12. Method for the spaced arrangement of concrete element ceiling parts with at least one lattice girder (14) comprising a top chord (15) for storage or transport, comprising the following methodical steps:
- provision of a concrete element ceiling part,
- clip attachment of at least one device (1) according to one of the Claims 1 to 8 in such a way that the device (1) is fastened to the top chord (15) by means of a non-positive or positive connection and the first side (22) of the spacer element (20) is arranged on the side facing away from the concrete element ceiling part (10), and
- depositing of another concrete element ceiling part (10) on the second side (22) of the spacer element (20).

13. Method for spaced arrangement according to Claim 12,
**characterised in that**
several devices (1) are arranged in a lattice on the respective top chord (15).

## Revendications

1. Dispositif (1) destiné à un agencement espacé lors du stockage ou du transport de parties de dalle en béton empilées (10) avec une poutre en treillis (14) et une courroie supérieure (15), présentant :
- un élément d'écartement (20) avec un premier côté (21) et un deuxième côté (22) et
- deux bras de retenue (30),
- chaque bras de retenue (30) étant réalisé en forme de U avec une première branche (31) et une deuxième branche (32),
- les premières branches (31) étant reliées à l'élément d'écartement (20),
- les deuxièmes branches (32) étant disposées entre les premières branches (31) et formant, sur des côtés se faisant face, une zone de serrage (38) destinée à recevoir par adhésion et/ou par coopération de formes la courroie supérieure,
- l'élément d'écartement (20) et les bras de retenue (30) étant fabriqués intégralement en matière plastique.
**caractérisé par le fait que** :
une pièce de serrage (40) est prévue, et cette pièce de serrage (40) peut se fixer sur le deuxième côté (22) de l'élément d'écartement (20).

2. Dispositif (1) selon la revendication 1,
**caractérisé par le fait que** :
la deuxième branche (32) présente une extrémité libre (34) .

3. Dispositif (1) selon les revendications 1 ou 2,
**caractérisé par le fait que** :
la deuxième branche (32) est orientée en direction de l'élément d'écartement (20) et qu'elle est écartée de l'autre deuxième branche (32) correspondante.

4. Dispositif (1) selon les revendications 1 à 3,
**caractérisé par le fait que** :
une section courbée (35) est formée entre la première branche (31) et la deuxième branche (32), et que la section courbée (35) forme un col en V (36) entre les deux bras de retenue (30).

5. Dispositif (1) selon les revendications 1 à 4,
**caractérisé par le fait que** :
une cannelure (39) est formée sur les côtés des zones de serrage (38) qui se font face.

6. Dispositif (1) selon les revendications 1 à 5,
**caractérisé par le fait que** :
chaque bras de retenue (30) présente une longueur (L), que les premières branches (31) sont liées à l'élément d'écartement (20) à une distance (A1), que les deuxièmes branches (32) sont espacées d'une distance (A3) et que ce qui suit s'applique : 0 < A3 < 6 mm, A1 ≥ L ≥ A3 et A1 > 16 mm.

7. Dispositif (1) selon les revendications 1 à 6,
**caractérisé par le fait que** :
l'élément d'écartement (20) est en croix.

8. Dispositif (1) selon l'une des revendications précédentes,
**caractérisé par le fait que** :
la pièce de serrage (40) présente deux mâchoires de serrage (44) saillantes et pouvant entrer en contact avec l'élément d'écartement (20) du côté opposé.

9. Partie de dalle en béton (10) avec une poutre en treillis (14) et une courroie supérieure (15) et au moins un dispositif (1) selon l'une des revendications précédentes.

10. Partie de dalle en béton selon la revendication 9,
**caractérisée par le fait que** :
chaque bras de retenue (30) présente une longueur (L), et la courroie supérieure (15) une dimension diagonale (D), et que la longueur (L) et la dimension diagonale (D) présentent le rapport suivant : 1,5D ≤ L ≤ 4D.

11. Utilisation du dispositif (1) selon l'une des revendications 1 à 8 précédentes pour un agencement espacé lors du stockage ou du transport de parties de dalle en béton (10) avec une poutre en treillis (14) et une courroie supérieure (15).

12. Procédé pour l'agencement espacé lors du stockage et du transport de parties de dalles en béton avec au moins une poutre en treillis (14) et une courroie supérieure (15), présentant les étapes de procédé suivantes :
- Mettre à disposition une partie de dalle en béton,
- Clipser au moins un dispositif (1) selon l'une des revendications 1 à 8 de telle sorte que le dispositif (1) soit fixé à la courroie supérieure (15) par adhésion et/ou par coopération de formes, et que le premier côté (22) de l'élément d'écartement (20) soit fixé sur le côté opposé à la partie de dalle en béton (10), et
- Déposer une autre partie de dalle en béton (10) sur le deuxième côté (22) de l'élément d'écartement (20) .

13. Procédé d'agencement espacé selon la revendication 12,
**caractérisé par le fait que** :
une majorité de dispositifs (1) est disposée selon un quadrillage sur la courroie supérieure (15).
